# EUROPEAN PATENT APPLICATION

(11) **EP 1 655 731 A2**
(43) Date of publication of application: **10.05.2006**
(21) Application number: 05023673.6
(22) Date of filing: 28.10.2005
(51) Int. Cl.: G11B 20/10, G06K 19/077

(54) **Content playback system and method**

(30) Priority: 30.10.2004 KR 2004087590
(71) Applicant: Samsung Electro-Mechanics Co., Ltd., Suwon-si, Gyeonggi-do (KR)
(72) Inventor: Park, Kyung-ho, Yeongtong-gu Suwon-si Gyeonggi-do (KR); Yoon, Hyungmin, Gangnam-gu Seoul (KR); Kang, Woo-shik, 916 Yeongtong-dong Yeongtong-gu Suwon-si (KR); Artem, Moutchkaev, Yongin-si Gyeonggi-do (KR); Lee, Yong, Yongi-si Gyeonggi-do (KR); Koo, Ji-hun, Yongin-si Gyeonggi-do (KR); Koo, Si-gyoung, Mapo-gun Seoul (KR)
(74) Representative: Grünecker, Kinkeldey, Stockmair & Schwanhäusser Anwaltssozietät

(57) **Abstract**

Content playback systems and methods, in which a desired content file can be easily played back in real time using radio frequency identification, are provided. The content playback system includes one or more tags, a playback unit, and a reader. The tags store one or more content files. The playback unit plays back a selected content file. The reader reads the selected content file, which is stored in one of the tags, in a noncontact manner and transmits the read content file to the playback unit.

## Description

Apparatuses and methods consistent with the present invention relate to content playback, and more particularly, to content playback using radio frequency identification (RFID).

In general, examples of content playback systems include compact disc (CD) players, digital versatile disc (DVD) players, MPEG-3 (MP3) players, computer systems, and cellular phones. These content playback systems play back content stored in media such as CDs, DVDs, hard disk drives (HDDs), and memory. Thus, such content playback systems are also called media players. The content may include, for example, music files, video files, composite files composed of audio and video, or document files.

However, the content playback systems can play back content only after users load media that stores the content in the content playback systems, or download the content into media embedded into the content playback systems, from other devices connected via cables to the content playback systems. If content to be played back is not stored in a medium that is loaded or embedded in a content playback system, users must replace the medium loaded in the content playback system, or connect a device having the content to be played back to the content playback system via a cable and download the content into the medium that is embedded in the content playback system.

For example, if a desired movie file is not on the DVD currently loaded in a DVD player, users must replace the loaded DVD with the DVD having the movie. Also, if a user desires to play back music files other than the ones stored in an MP3 player's embedded flash memory, the user must connect the MP3 player to a computer system via a cable and download the new music files into the flash memory.

It is the object of the present invention to provide a content playback system and method, in which a desired content file can be easily played back in real time using RFID.

This object is solved by the subject matter of the independent claims.

Preferred embodiments are defined in the dependent claims.

According to an aspect of the present invention, there is provided a content playback system comprising a tag, a playback unit, and a reader. The tag stores at least one content file. The playback unit plays back the content file. The reader reads the content file stored in the tag in a non-contact manner and transmits the read content file to the playback unit.

The tag may further store content file management information with respect to the stored content file. The playback unit may provide information about a selected content file, based on content file list information with respect to a playable content file, to the reader. The reader may transmit the content file list information, which is based on the content file management information that is read from the tag, to the playback unit, read the selected content file from the tag upon receiving the information about the selected content file from the playback unit, and transmit the read content file to the playback unit.

The tag may comprise an antenna, a power supply unit, a demodulator, control logic, and a modulator. The antenna is designed to communicate with the reader in a non-contact manner. The power supply unit supplies a power source to the tag upon receiving an RF signal through the antenna. The demodulator demodulates the RF signal received through the antenna into a digital signal, once the power source is supplied by the power supply unit. The control logic stores the content file and reads the content file according to the RF signal received from the demodulator, once the power source is supplied by the power supply unit. The modulator modulates the digital signal output from the control logic into an RF signal and transmits the RF signal to the antenna, once the power source is supplied by the power supply unit.

The control logic may comprise a memory, a command interpreter, a memory access unit, and a streaming control unit. The memory stores the content file. The command interpreter interprets the digital signal transmitted from the demodulator. The memory access unit accesses the memory. The streaming control unit creates a control command for an access to the memory according to a command received from the command interpreter, transmits the created control command to the memory access unit, packetizes data of the content file transmitted from the memory access unit, and transmits the packetized data of the content file to the modulator.

The power supply unit may operate in a passive manner, a semi-active manner, or an active manner.

The tag may comprise an antenna, a power supply unit, a demodulator, a memory, control logic, and a modulator. The antenna is designed to communicate with the reader in a non-contact manner. The power supply unit supplies a power source to the tag upon receiving an RF signal through the antenna. The demodulator demodulates the RF signal received through the antenna into a digital signal once the power source is supplied by the power supply unit. The memory stores the content file. The control logic controls an access to the memory according to the RF signal received from the demodulator and outputs data of the content file accessed in the memory as a digital signal. The modulator modulates the digital signal output from the control logic into an RF signal and transmits the RF signal to the antenna.

The control logic may comprise a command interpreter, a memory access unit, and a streaming control unit. The command interpreter interprets the digital signal transmitted from the demodulator. The memory access unit accesses the memory. The streaming control unit creates a control command for an access to the memory according to a command received from the command interpreter, transmits the created control command to the memory access unit, packetizes data of the content file transmitted from the memory access unit, and transmits the packetized data of the content file to the modulator.

The content file may be a media file or a data file. The media file may be, for example, one of an audio file, a still image file, a moving image file, a composite file composed of audio and video, or a program preview file, and the data file may be, for example, a document file or a program source code file.

The reader may be a portable device comprising an antenna, a first interface, a second interface, a buffer, and a control unit. The antenna is designed to communicate with the tag in a non-contact manner. The first interface is designed to transmit and receive data between the tag and the reader through the antenna. The second interface is designed to transmit and receive data between the playback unit and the reader. The buffer stores data of the content file transmitted from the first interface. The control unit controls the operations of the first interface, the second interface, and the buffer.

Upon receiving content file management information from the first interface, the control unit may transmit content file list information with respect to a playable content file, which is based on the received content file management information, to the second interface. Upon receiving information about a selected content file from the second interface, the control unit may, transmit a signal that requests the selected content file to the first interface. Upon receiving data of the selected content file from the first interface, the control unit may store the received data of the content file in the buffer. The control unit also may transmit the data of the content file stored in the buffer to the second interface by controlling the second interface.

The reader may be included within the playback unit.

According to another aspect of the present invention, there is provided a content playback system comprising a tag group, a playback unit, and a reader. The tag group includes a plurality of tags each storing at least one content file. The playback unit plays back the content files. The reader reads the content files stored in the plurality of tags, and transmits the read content files to the playback unit.

The reader may arrange the content file management information read from the plurality of tags according to a predetermined criterion to create content file list information, and transmit the created content file list information to the playback unit.

According to still another aspect of the present invention, there is provided a content playback method used in a system including at least one tag that stores at least one content file, a reader that can communicate with the tag in a non-contact manner, and a playback unit that can communicate with the reader. The content playback method comprises reading a content file from one of the tags in a non-contact manner, by the reader, and transmitting the read content file to allow the read content file to be played back in the playback unit.

According to yet another aspect of the present invention, there is provided a content playback method used in a system including at least one tag that stores at least one content file and a playback unit having a reader that can communicate with the tag in a non-contact manner. The content playback method comprises reading a content file from one of the tags in a non-contact manner, using the reader in the playback unit, and playing back the content file that is read using the reader.

According to yet another aspect of the present invention, there is provided a content playback method used in a system including at least one tag that stores at least one content file and a playback unit having a reader that can communicate with the tag in a non-contact manner. In the content playback method, upon receiving a signal that requests content file management information, the tag transmits the content file management information stored in a header region of the content file to the reader of the playback unit. Also, in the content playback method, upon receiving a signal that requests one of the content files stored in the tag, the tag reads data of the requested content file and transmits the read data to the reader.

The above and other aspects of the present invention will become more apparent by describing in detail exemplary embodiments thereof with reference to the attached drawings in which:

FIG. 1 is a block diagram of a content playback system according to an exemplary embodiment of the present invention;

FIG. 2 is a block diagram of control logic shown in FIG. 1;

FIG. 3 is a block diagram of a content playback system according to another exemplary embodiment of the present invention;

FIGS. 4A through 4C show examples of the application of a content playback system according to an exemplary embodiment of the present invention; and

FIG. 5 is a flowchart illustrating a content playback method according to an exemplary embodiment of the present invention.

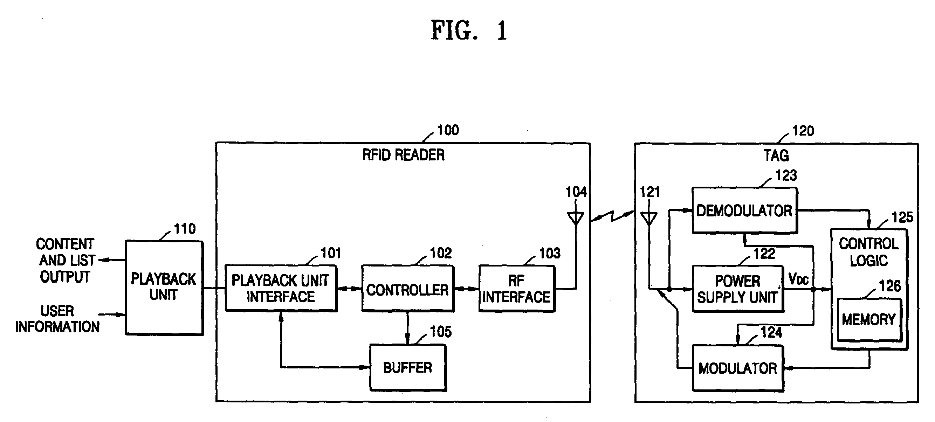

FIG. 1 is a block diagram of a content playback system according to an exemplary embodiment of the present invention. Referring to FIG. 1, the content playback system includes an RFID reader 100, a playback unit 110, and a tag 120.

The RFID reader 100 can read information stored in the tag 120 in a non-contact manner. In other words, the RFID reader 100 broadcasts an RF signal to recognize if a tag is nearby, reads a content file stored in the tag 120 in a non-contact manner upon receiving an RF signal from the tag 120 in response to the broadcast RF signal, and transmits the read content file to the playback unit 110.

To this end, the RFID reader 100 includes a playback unit interface 101, a controller 102, an RF interface 103, an antenna 104, and a buffer 105.

The playback unit interface 101 transmits and receives data between the playback unit 110 and the RF reader 100. ln particular, once the playback unit 110 is turned on, the playback unit interface 101 applies an operating voltage to the controller 102, transmits content file list information with respect to a playable content file, which is output from the controller 102, and a content file read from the buffer 105 to the playback unit 110, and transmits content file selection information generated by the playback unit 110 to the controller 102.

The controller 102 controls the overall function of the RFID reader 100, such as recognizing the tag 120, reading content file management information and content files stored in the tag 120, and transmitting the content file list information, which is based on the content file management information, and the read content files to the playback unit 110.

In other words, once the operating voltage is applied to the controller 102 from the playback unit interface 101, the controller 102 turns on the RFID reader 100 and controls the RF interface 103 to output an RF signal used to recognize if a tag is nearby. Upon receiving a signal in response to the output RF signal from the RF interface 103, the controller 102 recognizes that a tag is nearby.

The controller 102 transmits an RF signal that requests the content file management information stored in the tag 120 based on identification information of the tag 120 that is included in the responding signal received from the RF interface 103, to the RF interface 103. Upon receiving the content file management information with respect to the content file from the RF interface 103, the controller 102 creates a list of content files that can be played back, based on the received content file management information, and transmits the created list to the playback unit interface 101.

Upon receiving the content file selection information from the playback unit interface 101, the controller 102 transmits an RF signal that requests a content file selected based on the content file selection information, to the RF interface 103. Upon receiving the content file from the RF interface 103, the controller 102 stores the received content file in the buffer 105 and controls the playback unit interface 101 such that the content file stored in the buffer 105 is transmitted to the playback unit interface 101.

Here, the content file transmitted from the RF interface 103 can be transmitted in units of a predetermined block size. This is because the tag 102 transmits the content file in such units. The predetermined block size can be determined according to the available bandwidth between the RFID reader 100 and the tag 120. This is because the amount of data that can be transmitted at one time is proportional to the bandwidth. If the content file transmitted from the RF interface 103 is transmitted in the units of the predetermined block size, the controller 102 controls the RF interface 103 to output the RF signal that requests the content file in the units of the predetermined block size, and receives data of the content file in the units of the predetermined block size from the RF interface 103.

Also, once the content file is transmitted in the units of the predetermined block size, the controller 102 can check if information indicating the end of the content file is included in data received in units of the predetermined block size. Also, the controller 102 can check for transmission errors in the received data of the content file. Transmission error checking can be performed, for example, using checksums or parity bits.

The RF interface 103 makes it possible to transmit and receive data between the RFID reader 100 and the tag 120. In other words, once the RFID reader 100 is turned on and RF signal transmission is requested by the controller 102, the RF interface 103 broadcasts the RF signal through the antenna 104. Also, upon receiving an RF signal in response to the RF signal broadcast through the antenna 104, the RF interface 103 transmits the received RF signal to the controller 102.

Upon receiving the signal that requests the content file management information from the controller 102, the RF interface 103 transmits the received signal to the tag 120 through the antenna 104. Upon receiving the content file management information from the tag 120, the RF interface 103 transmits the received content file management information to the controller 102.

Upon receiving the signal that requests the content file from the controller 102, the RF interface 103 transmits the received signal through the antenna 104. Upon receiving data of the content file through the antenna 104, the RF interface 103 transmits the received data of the content file to the controller 102.

The buffer 105 stores the data of the content file, received under the control of the controller 102, and transmits the stored data of the content file to the playback unit interface 101.

The playback unit 110 can play back media files, data files, or both, and can be, for example, a CD player, a DVD player, a computer system, a cellular phone, an audio device, or an MP3 player. The media files may be, for example, audio files, still or moving image files, composite files composed of audio and video, or program preview files. The data files may be, for example, document files or program source code files. The document files may be created using application programs such as a spreadsheet program, a word processing program, etc. In this way, the playback unit 110 can play back files that can be stored in a computer system. Also, the playback unit 110 may be a portable device.

Once the playback unit 110 is turned on by a user, it provides the operating voltage to the RFID reader 100. The playback unit 110 and the RFID reader 100 can be connected as hardware. Upon receiving the content file list information from the RFID reader 100, the playback unit 110 provides the content file list information to the user. The content file list information can be provided, for example, on a display screen or in the form of audio.

Once the user selects a content file based on the provided content file list information, the playback unit 110 transmits information about the selected content file to the RFID reader 100. For example, if a list of selectable content files is provided and the user selects the second content file, the playback unit 110 transmits selection information indicating that the second content file has been selected to the RFID reader 100.

Upon receiving data of the selected content file from the RFID reader 100, the playback unit 110 plays back the received data of the content file. If the content file is a video file or a document file, the playback unit 110 displays the received data of the content file. If the content file is an audio file, the playback unit 110 outputs the received data of the content file through a speaker (not shown). If the content file is a composite file, the playback unit 110 outputs audio included in the content file through a speaker while displaying video included in the content file.

The tag 120 communicates with the RFID reader 100 in a non-contact manner. In other words, the tag 120 stores the content file management information and the content file and provides the content file management information and the content file to the RFID reader 100 according to a request of the RFID reader 100. The tag 120 can store at least one content file. The content files stored in the tag 120 may be media files, data files, or both. The media files may be, for example, audio files, still image files, moving image files, composite files composed of audio and video, or program preview files. The program preview files may include, for example, movie preview files. The composite files may be, for example, album files or video letters. The data files may be, for example, document files or program source files. The document files may be created using application programs such as a spreadsheet program, a word processing program, etc.

As shown in FIG. 1, the tag 120 includes an antenna 121, a power supply unit 122, a demodulator 123, a modulator 124, and control logic 125.

. Once the RFID reader 100 is turned on and an RF signal is received from the RFID reader 100 at the tag 120 through the antennas 104 and 121, the power supply unit 122 provides a power source V_{DC} to the demodulator 123, the modulator 124, and the control logic 125. Also, the power supply unit 122 provides the power source V_{DC} to the demodulator 123, the modulator 124, and the control logic 125 whenever it receives an RF request signal from the RFID reader 100.

lf the tag 120 operates in a passive manner, the power supply unit 122 is configured as a radio frequency-direct current (RF-DC) rectifier. ln other words, upon receiving the RF signal through the antenna 121, the power supply unit 122 rectifies the RF signal into DC and provides the power source V_{DC} to the demodulator 123, the modulator 124, and the control logic 125.

If the tag 120 operates in a semi-active manner, the power supply unit 122 is configured to selectively operate as an RF-DC rectifier or a battery. In other words, if an RF signal is initially received through the antenna 121, the tag 120 operates in a passive manner such that the power supply unit 122 provides the power source V_{DC} to the demodulator 123, the modulator 124, and the control logic 125 using the RF-DC rectifier. Thereafter, when the tag 120 transmits data, the tag 120 operates in an active manner such that the power supply unit 122 operates as a battery.

Also, if the tag 120 operates in an active manner, the power supply unit 122 is configured as a battery. Thus, upon receiving the RF signal through the antenna 121, the battery provides the power source V_{DC} to the demodulator 123, the modulator 124, and the control logic 125.

When provided with the power source V_{DC}, the demodulator 123 converts the received RF signal into a digital signal and transmits the digital signal to the control logic 125. The modulator 124 converts the digital signal output from the control logic 125 into an RF signal and outputs the RF signal to the antenna 121.

The control logic 125 reads content file management information and a content file stored in a memory 126 based on the digital signal received from the demodulator 123, and transmits the read content file management information and content file to the demodulator 124. In other words, upon receiving a signal that requests the content file management information from the demodulator 123, the control logic 125 searches for content file header information stored in the memory 126 and transmits the content file header information to the modulator 124. The content file header information includes the content file management information. If a plurality of content files are stored in the memory 126, the content file header information includes content file management information with respect to the plurality of content files. The content file management information may include, for example, the start position at which the content file was recorded into the memory 126, and information required for identifying the content file, such as the name of the content file.

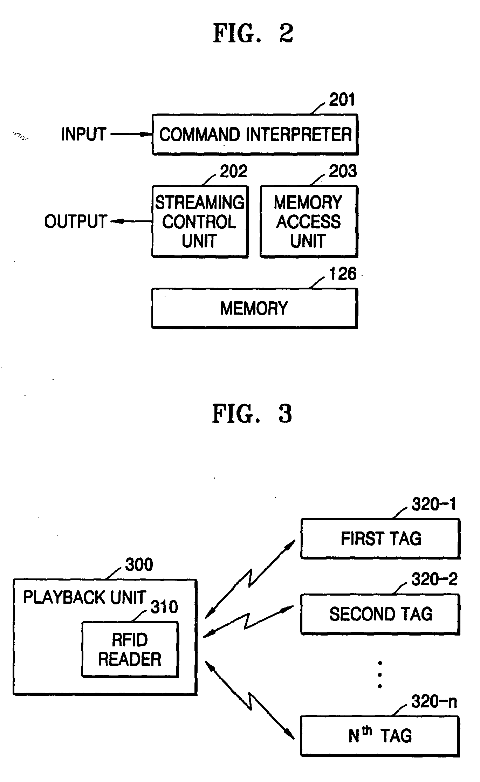

As shown in FIG. 2, the control logic 125 includes a command interpreter 201, a streaming control unit 202, a memory access unit 203, and the memory 126.

The command interpreter 201 interprets the digital signal received from the demodulator 123. The digital signal is converted from an RF signal received from the RFID reader 100, and the command interpreter 201 interprets the digital signal to separate commands for the RFID reader 100 from other data. The commands may be, for example, read commands, write commands, tag operation stop commands, and command that requests identification information of the tag 120.

The streaming control unit 202 creates a control command for an access to the memory 126, according to the command received from the command interpreter 201, and transmits the control command to the memory access unit 203. In other words, if the command received from the command interpreter 201 is a signal that requests content file management information, the streaming control unit 202 creates a control command that requests reading of the content file header information from the memory 126. If the command received from the command interpreter 201 is a signal that requests a content file, the streaming control unit 202 creates a control command that requests reading of the content file from the memory 126.

Also, the streaming control unit 202 constructs a packet to be transmitted to the RFID reader 100, and transmits the packet to the RFID reader 100 in a streaming manner. Here, a transmittable packet may include, for example, an RF signal in response to the received RF signal, content file management information, and a content file. Also, if the command received from the command interpreter 201 is a signal that requests retransmission, the streaming control unit 202 retransmits a data packet of the most recently transmitted content file in a streaming manner. To this end, the streaming control unit 202 may include a storage element (not shown), such as a cache memory.

The memory access unit 203 performs modification, deletion, reading, and writing operations on the memory 126. In other words, the memory access unit 203 accesses the memory 126 based on the control command for an access to the memory 126, received from the streaming control unit 202, and transmits data that is read from the memory 126 to the streaming control unit 202.

Upon receiving the control command that requests reading of the content file header information from the streaming control unit 202, the memory access unit 203 reads the content file header information from the memory 126. The content file header information may include content file list information stored in the memory 126 and content file start position information. If the memory 126 has a multiple structure, the content file header information may include, for example, information about the sizes and locations of any memory currently being used and any memory not currently being used.

Upon receiving the control command that requests reading of a content file from the streaming unit 202, the memory access unit 203 recognizes the start position of the content file based on the content file header information, reads data of the content file, and transmits the data to the streaming control unit 202. Here, the memory access unit 203 reads the data of the content file in units of a predetermined block size, transmits the data to the streaming control unit 202, and stores position information about the data of the content file to be next read in the units of the predetermined block size in a register (not shown). The register may be included in the memory access unit 203. The predetermined block size can be determined according to the amount of data that can be transmitted between the tag 120 and the RFID reader 100 at one time.

The memory 126 stores at least one content file, and content file management information with respect to the stored content file. The content file management information may be stored in a header region of the content file. Thus, the content file management information can be defined as content file header information. The content file can be, for example, a media file, a data file, or both. In other words, the content file may include files that can be stored in a computer system.

In FIG. 1, the tag 120 includes the memory 126 within the control logic 125. However, the tag 120 may be implemented such that the control logic 125 and the memory 126 are separate. Also, in FIG. 1, the RFID reader 100 and the playback unit 110 are separate, and one tag 120 and the RFID reader 100 communicate with each other in a non-contact manner. However, the RFID reader 100 may be included in the playback unit 110, and the RFID reader 100 may communicate with a plurality of tags in a non-contact manner, read at least one content file from the plurality of tags, and play back the content file using the playback unit 110.

FIG. 3 shows an example in which an RFID reader 310 is included in a playback unit 300, and the RFID reader 310 communicates with a plurality of tags 320-1 through 320-n in a non-contact manner. The RFID reader 310, the plurality of tags 320-1 through 320-n, and the playback unit 300 are configured in the same manner as in FIGS. 1 and 2. The plurality of tags 320-1 through 320-n can be defined as one tag group.

However, the RFID reader 310 of FIG. 3 can create a list of content files read from the plurality of tags 320-1 through 320-n according to predetermined priority. For example, if the predetermined priority is based on reverse order of contact, the list of content files is created such that content file management information with respect to the content file stored in the most recently contacting tag is created first. Or, if the predetermined priority is based on order of contact, the list of content files is created such that content file management information with respect to the content file stored in the first contacting tag is created first. The priority can be determined according to various criteria aside from the examples above.

Since the tags 120 and 320-1 through 320-n store content files, they can be defined as media tags.

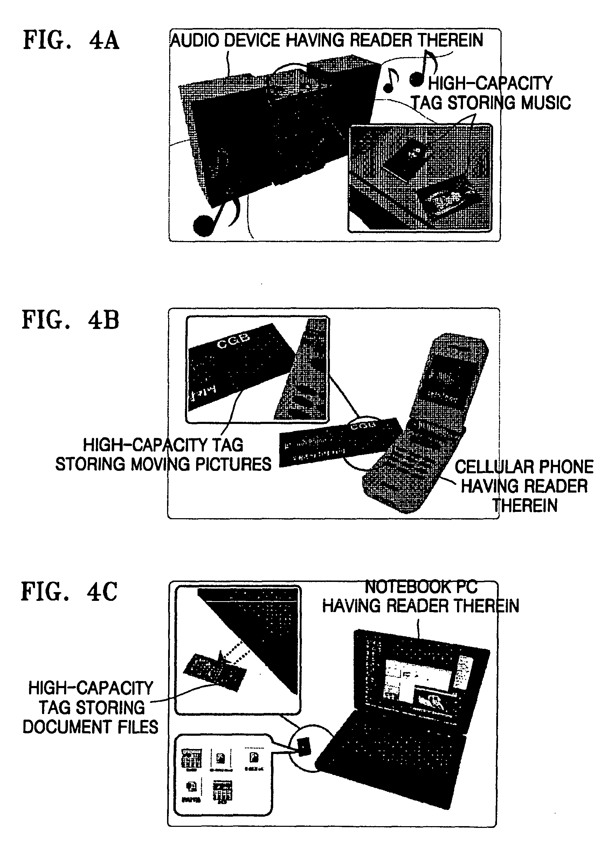

FIG. 4A shows an example of the application of an audio device containing an RFID reader, and a plurality of tags. FIG. 4B shows an example of the application of a tag that stores moving image files and a cellular phone containing an RFID reader. FIG. 4C shows an example of the application of a tag having private work files and a notebook personal computer containing an RFID reader. Also, a tag according to an exemplary embodiment of the present invention can be attached to a movie poster, with a movie preview stored in the tag, and the movie preview can be played back using a cellular phone containing an RFID reader according to an exemplary embodiment of the present invention.

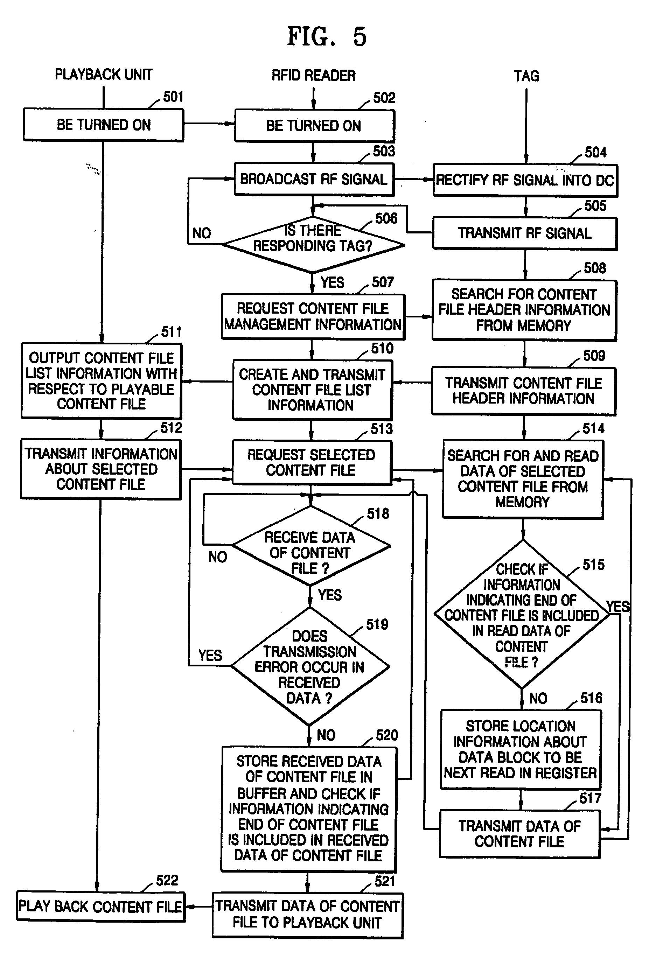

FIG. 5 is a flowchart illustrating a content playback method according to an exemplary embodiment of the present invention, which will be described with reference to FIGS. 1 and 5.

In operation 501, once the playback unit 110 is turned on by a user, the playback unit 110 turns on the RFID reader 100 in operation 502. Once the RFID reader 100 is turned on, it broadcasts an RF signal in operation 503. Thus, the tag 120 near the RFID reader 100 rectifies the received RF signal into DC in operation 504. Rectification of the received RF signal into DC turns the tag 120 on. Thus, operation 504 can be defined according to the manner of the operation of the tag 120, such as passive, semi-active, or active, as described above with respect to the power supply unit 122 of FIG. 1.

The tag 120 transmits an RF signal to the RFID reader 100 in response to the received RF signal, in operation 505. Here, the RF signal responding to the received RF signal may include, for example, identification information of the tag 120.

After broadcasting an RF signal, the RFID reader 100 determines whether a responding tag exists based on reception of the RF signal responding to the broadcasted RF signal, in operation 506. If an RF signal responding to the broadcasted RF signal does not exist, the process returns to operation 503 and the RFID reader 100 broadcasts the RF signal again. However, if at least one RF signal is received in response to the broadcasted RF signal, the RFID reader 100 recognizes that there is a responding tag.

If the RFID reader 100 recognizes that there is a responding tag, the RFID reader 100 transmits an RF signal that requests content file management information, to the responding tag 120, in operation 507. Thus, the tag 120 searches for content file header information from the memory 126 in operation 508 and transmits the found content file header information to the RFID reader 100 in operation 509. Here, after turning itself on in response to the received RF signal, the tag 120 searches for the content file header information. The tag 120 can be turned on every time it receives an RF signal from the RFID reader 100.

The RFID reader 100 creates content file list information with respect to at least one playable content file based on the received content file header information, and transmits the created content file list information to the playback unit 110, in operation 510.

In operation 511, the playback unit 110 outputs the received content file list information to a user. The content file list information may be output, for example, on a display screen or in the form of audio. If a user selects a content file based on the content file list information, the playback unit 110 transmits information about the selected content file to the RFID reader 100 in operation 512.

The RFID reader 100 transmits a signal that requests the selected content file, to the tag 120, in operation 513. The tag 120 searches for and reads data of the content file requested by the RFID reader 100 from the memory 126, based on the content file header information, in operation 514. The tag 120 checks if information indicating the end of the content file is included in the read data of the content file in operation 515. This is because the data of the content file may be read in units of a predetermined block size.

If the information indicating the end of the content file is not included in the read data of the content file, the tag 120 stores location information about a data block to be next read, in a register (e.g., of the memory access unit 203), in operation 516.

The tag 120 transmits the read data of the content file to the RFID reader 100 in operation 517. Also, if the information indicating the end of the content file is included in the read data of the content file, the read data of the content file is transmitted to the RFID reader 100. After transmitting the read data of the content file, the tag 120 returns to operation 514 and stands by for transmitting the next unit of data of the content file.

Once the data of the content file is received in the units of the predetermined block size, in operation 518, the RFID reader 100 determines whether any transmission errors have affected the received data of the content file, in operation 519.

If it is determined that no transmission errors have occurred, the RFID reader 100 stores the received data of the content file in the buffer 105, and checks if the information indicating the end of the content file is included in the stored data of the content file, in operation 520. If it is determined that a transmission error has occurred, the RFID reader 100 returns to operation 513 and can transmit a signal that requests retransmission of the content file to the tag 120. Also, if the information indicating the end of the content file is not included in the stored data of the content file, the RFID reader 100 performs operation 513 and requests the reading of the next unit of data of the content file.

If a predetermined amount of data is stored in the buffer 105, the RFID reader 100 transmits data of the content file stored in the buffer 105 to the playback unit 110 in operation 521. The playback unit 110 plays back the content file in real time based on the received data of the content file in operation 522.

FIG. 5 shows a case where a content file stored in one tag is played back. However, a method of playing back a content file selected from content files stored in a plurality of tags can be easily achieved, based on the content playback method shown in FIG. 5. Similarly, a method of playing back a content file selected from content files stored in one tag can be easily achieved in the same way. If there is a plurality of content files that can be played back, a list of content files can be created according to predetermined criteria.

As described above, a playable content file is stored in a tag that can perform communication in a non-contact manner, and the content file stored in the tag is read and played back in real time using an RFID reader connected to a playback unit, thereby allowing a user to easily play back the content file.

For example, to play back a desired content file, users do not have to access a server or a system that can provide the content file via the Internet, perform other connection tasks, or change the medium loaded in a playback unit.

Also, users can play back new content files using a portable playback unit containing an RFID reader at any time and in any place. For example, a movie preview stored in a tag attached to a movie poster or a movie ticket can be played back using a portable terminal.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A content playback system comprising:
a tag which stores a content file;
a playback unit which plays back the content file; and
a reader which reads the content file stored in the tag in a non-contact manner and transmits the content file to the playback unit.

2. The content playback system of claim 1, wherein the tag further stores content file management information with respect to the content file;
wherein the reader transmits content file list information, which is based on the content file management information that is read from the tag, to the playback unit;
wherein the content file is selectable, based on the content file list information, if the content file is playable;
wherein the playback unit provides information about the content file to the reader, if the content file is selected; and
wherein, the reader reads the content file from the tag, based on the information about the content file received from the playback unit, and transmits the content file to the playback unit.

3. The content playback system of claim 2, wherein the tag stores the content file management information in a header region of the content file.

4. The content playback system of one of claims 1 to 3, wherein the tag comprises:
an antenna which communicates with the reader in a non-contact manner;
a power supply unit which supplies a power source to the tag upon receiving a first radio frequency, RF, signal through the antenna;
a demodulator which demodulates a second RF signal received through the antenna into a first digital signal, once the power source is supplied by the power supply unit;
control logic which stores the content file and reads the content file according to the first digital signal received from the demodulator, once the power source is supplied by the power supply unit; and
a modulator which modulates a second digital signal output from the control logic into a third RF signal and transmits the third RF signal to the antenna, once the power source is supplied by the power supply unit.

5. The content playback system of claim 4, wherein the control logic comprises:
a memory which stores the content file;
a command interpreter which interprets the first digital signal transmitted from the demodulator;
a memory access unit which accesses the memory; and
a streaming control unit which creates a control command for an access to the memory according to a command received from the command interpreter, transmits the control command to the memory access unit, packetizes data of the content file read from the memory and transmitted from the memory access unit, and transmits the packetized data of the content file to the modulator.

6. The content playback system of claim 4 or 5, wherein the power supply unit operates in a passive manner.

7. The content playback system of claim 4 or 5, wherein the power supply unit operates in a semi-active manner.

8. The content playback system of claim 4 or 5, wherein the power supply unit operates in an active manner.

9. The content playback system of one of claims 1 to 3, wherein the tag comprises:
an antenna which communicates with the reader in a non-contact manner;
a power supply unit which supplies a power source to the tag upon receiving a first radio frequency, RF, signal through the antenna;
a demodulator which demodulates a second RF signal received through the antenna into a first digital signal once the power source is supplied by the power supply unit;
a memory which stores the content file;
control logic which controls access to the memory according to the first digital signal received from the demodulator, and outputs data of the content file accessed in the memory as a second digital signal; and
a modulator which modulates the second digital signal output from the control logic into a third RF signal and transmits the third RF signal to the antenna.

10. The content playback system of claim 9, wherein the control logic comprises:
a command interpreter which interprets the first digital signal transmitted from the demodulator;
a memory access unit which accesses the memory; and
a streaming control unit which creates a control command for an access to the memory according to a command received from the command interpreter, transmits the control command to the memory access unit, packetizes data of the content file read from the memory and transmitted from the memory access unit, and transmits the packetized data of the content file to the modulator.

11. The content playback system of one of claims 1 to 10, wherein the content file is a media file or a data file.

12. The content playback system of claim 11, wherein the media file is one of an audio file, a still image file, a moving image file, a composite file including audio and video, and a program preview file.

13. The content playback system of claim 11, wherein the data file is a document file or a program source code file.

14. The content playback system of claim 11, wherein the tag is attached to a poster, a ticket, or a card.

15. The content playback system of one of claims 1 to 14, wherein the tag is attached to a poster, a ticket, or a card.

16. The content playback system of one of claims 1 to 15, wherein the reader is a portable device.

17. The content playback system of one of claims 1 to 16, wherein the reader comprises:
an antenna which communicates with the tag in a non-contact manner;
a first interface which transmits and receives data between the tag and the reader through the antenna;
a second interface which transmits and receives data between the playback unit and the reader;
a buffer which stores data of the content file transmitted from the first interface; and
a control unit which controls operation of the first interface, the second interface, and the buffer.

18. The content playback system of claim 17, wherein:
upon receiving content file management information from the first interface, the control unit generates content file list information with respect to the content file, if the content file is playable, and transmits the content file list information to the second interface, wherein the content file list information is based on the content file management information;
upon receiving information about the content file, when the content file is selected based on the content file list information, from the second interface, the control unit transmits a signal that requests the content file to the first interface; and
upon receiving data of the content file from the first interface, the control unit stores the data of the content file in the buffer, and transmits the data of the content file stored in the buffer to the second interface.

19. The content playback system of one of claims 1 to 18, wherein the reader is turned on if the playback unit is turned on.

20. The content playback system of one of claims 1 to 19, wherein the reader is included within the playback unit.

21. The content playback system of one of claims 1 to 20, wherein the tag is a tag group including a plurality of tags each storing at least one content file,
wherein the reader reads a chosen content file selected from among the content files stored in the plurality of tags, and transmits the chosen content file to the playback unit; and
the playback unit plays back the chosen content file.

22. The content playback system of claim 21, wherein the reader arranges content file management information read from the plurality of tags according to a predetermined criterion to create content file list information and transmits the created content file list information to the playback unit.

23. The content playback system of claim 22, wherein upon receiving content file selection information corresponding to the chosen content file, which is selected based on the content file list information, from the playback unit, the reader reads the chosen content file from the tag that stores the chosen content file.

24. A content playback method used in a system including a tag which stores a content file, a reader which communicates with the tag in a non-contact manner, and a playback unit which communicates with the reader, the content playback method comprising;
reading the content file from the tag by the reader, in the non-contact manner; and playing back the content file.

25. The content playback method of claim 24, further comprising transmitting the content file to the playback unit, wherein the playing back of the content file is performed in the playback unit.

26. The content playback method of claim 24 or 25, further comprising:
upon receiving content file management information from the tag, creating content file list information with respect to the content file, at the reader, if the content file is playable;
transmitting the content file list information to the playback unit; and
upon receiving content file selection information indicating the content file is a chosen content file selected for playing back, based on the content file list information, from the playback unit, reading the chosen content file from the tag in a non-contact manner, at the reader.

27. The content playback method of claim 26, wherein the content file management information is received, at the reader, from a plurality of tags, each storing at least one content file;
creating the content file list information for playable content files, at the reader, based on the content file management information; and
selecting the chosen content file from among the playable content files, based on the content file list information.

28. The content playback method of claim 26 or 27, wherein the content playback method is performed upon receiving at the reader a second radio frequency, RF, signal responding to a first RF signal transmitted from the reader.

29. The content playback method of one of claims 24 to 28, wherein the content file is one of an audio file, a still image file, a moving image file, a composite file including audio and video, and a program preview file.

30. The content playback method of claim 24, wherein the playback unit includes the reader and the content playback method further comprises:
generating content file list information for the content file, if the content file is playable;
selecting the content file for playing back, based on the content file list information; and
reading the content file from the tag in a non-contact manner using the reader, if the content file is selected for playing back.

31. The content playback method of claim 30, wherein the system includes a plurality of tags, each storing at least one content file, and the content playback method further comprises:
generating content file list information for each content file that is playable;
selecting a chosen content file for playing back based on the content file list information; and
reading the chosen content file, in a non-contact manner using the reader, from a corresponding tag storing the chosen content file.

32. The content playback method of claim 24, wherein the playback unit has the reader and the content playback method further comprises:
upon receiving a first signal that requests content file management information, transmitting the content file management information stored in a header region of the content file to the reader; and
upon receiving a second signal that requests the content file stored in the tag, reading data of the content file and transmitting the data to the reader.

33. The content playback method of claim 32, wherein the content file is a media file or a data file.

34. The content playback method of claim 33, wherein the media file is one of an audio file, a still image file, a moving image file, a composite file including audio and video, and a program preview file.

35. The content playback method of claim 33 or 34, wherein the data file is a document file or a program source code file.
